# DEMANDE DE BREVET EUROPEEN

(11) **EP 0 720 083 A1**
(43) Date de publication de la demande: **03.07.1996**
(21) Numéro de dépôt: 95402579.7
(22) Date de dépôt: 17.11.1995
(51) Int. Cl.: G06F 3/023, G06K 11/18

(54) **Procédé pour le contrôle d'un processus à l'aide d'un terminal**

(30) Priorité: 28.12.1994 FR 9415768
(71) Demandeur: SEXTANT AVIONIQUE (Société Anonyme), F-78141 Velizi Villacoublay (FR)
(72) Inventeur: Gaultier, Philippe, F-78150 Le Chesnay (FR); Vouillon, Patrick, F-91140 Villebon sur Yvette (FR); Simon, Frédéric, F-78550 Elancourt (FR)
(74) Mandataire: de Saint-Palais, Arnaud Marie

(57) **Abrégé**

Pour le contrôle d'un processus industriel à l'aide d'un terminal (11) comprenant un écran (2), un processeur connecté aux équipements intervenant dans le processus, et un manipulateur (6), le procédé selon l'invention comprend l'affichage sur l'écran (2) de l'image (9) d'un panneau de commande desdits équipements, l'affichage en surimpression d'un axe (8) traversant l'écran (2), la sélection d'un organe de commande sur ladite image (9) en faisant varier l'orientation de l'axe (8) grâce au manipulateur (6), jusqu'à ce qu'il intercepte l'image dudit organe, la singularisation de l'image dudit organe, la simulation à l'écran (2) de l'actionnement dudit organe pour l'amener dans une nouvelle position, en réponse à l'actionnement dudit manipulateur (6), et la validation de cette nouvelle position et son émission vers l'équipement commandé par ledit organe.

## Description

La présente invention concerne un procédé pour le contrôle d'un processus industriel à l'aide d'un terminal de commande muni d'un écran de visualisation sur lequel peuvent être affichés des images représentant les panneaux de commande du processus.

Elle s'applique notamment, mais non exclusivement, au pilotage des aérodynes, lequel fait habituellement intervenir de nombreux équipements électroniques munis de claviers de commande, commutateurs, interrupteurs, potentiomètres et afficheurs.
A l'heure actuelle, on assiste à un accroissement du nombre d'équipements installés à bord des aérodynes, et notamment dans l'espace réduit du poste de pilotage dans lequel il devient de plus en plus difficile d'ajouter de nouveaux équipements.

Par ailleurs, si ces équipements ont pour but de faciliter les tâches du pilote et d'améliorer la sécurité, la multiplication des organes de commande et de visualisation tend à aboutir à l'effet inverse en dispersant l'attention du pilote et en accroissant la complexité des opérations de pilotage.

Pour résoudre ce problème, on a déjà proposé de connecter ces équipements électroniques à un terminal comprenant un processeur, un écran de visualisation donnant accès à toutes les informations délivrées par ces équipements et un organe de commande comprenant notamment un clavier permettant d'envoyer des commandes vers ces équipements.

D'une manière générale, on sait que les dialogues homme/processeur font de plus en plus fréquemment intervenir l'affichage à l'écran d'un curseur que l'opérateur doit déplacer pour désigner des emplacements de l'écran représentatifs de données que l'on veut saisir ou de fonctions que l'on veut réaliser.

De nombreuses solutions ont donc été proposées pour permettre à l'opérateur de commander les déplacements du curseur et pour valider les emplacements désignés par ce dernier.

Or, parmi ces solutions, celles qui sont les plus répandues à l'heure actuelle telles que les touches de direction prévues sur le clavier, les souris, ou les "trackballs" ne conviennent pas bien ou même sont prohibées dans certaines applications, notamment dans le cas de terminaux équipant les postes de pilotage des aérodynes.

Ainsi, la souris exige pour son fonctionnement une grande surface plane, horizontale, incompatible avec l'environnement des postes de pilotage.

Le "trackball" qui fait intervenir une sphère que l'opérateur fait tourner du doigt, est un outil difficile à rendre étanche et, en conséquence, difficile à intégrer dans un cockpit. En outre, il s'avère peu pratique et manque de précision.

Les touches de direction du clavier ne sont pas ergonomiques et ne permettent des déplacements du curseur que selon quatre axes seulement.

Pour supprimer ces inconvénients, on a également proposé des tablettes tactiles aptes à détecter les déplacements d'un doigt de l'opérateur pour guider le curseur affiché sur l'écran.

Toutefois ces tablettes tactiles qui sont, au demeurant très performantes, présentent l'inconvénient de nécessiter une surface utile relativement importante.

L'invention a donc pour but de supprimer ces inconvénients grâce à un procédé faisant intervenir un terminal de communication homme/processeur, compact et ergonomique, comprenant un écran de visualisation sur lequel sont affichées des images représentant des panneaux de commande des équipements qui contrôlent le processus, un processeur connecté auxdits équipements, et un manipulateur manoeuvrable quelle que soit l'orientation de la main, et permettant cependant d'obtenir une grande précision des sélections.

Pour parvenir à ces résultats, dans le but de contrôler un processus industriel, ce procédé est caractérisé en ce qu'il comprend les étapes suivantes :
- l'affichage sur l'écran de visualisation de l'image d'un panneau de commande du processus comportant au moins un organe de commande et éventuellement au moins un afficheur présentant un paramètre de contrôle du processus, et l'affichage en surimpression d'un axe traversant l'écran et mobile en rotation de manière à pouvoir balayer l'ensemble de l'écran,
- la sélection dudit organe de commande, en faisant varier l'orientation de l'axe par une première action de commande manuelle appliquée audit manipulateur jusqu'à ce que l'axe intercepte l'image dudit organe de commande,
- la singularisation à l'écran, par la modification de son aspect, de l'image de l'organe de commande traversé par ledit axe,
- la simulation à l'écran en temps réel de l'actionnement de l'organe de commande sélectionné pour l'amener dans une nouvelle position, en réponse à une seconde action de commande appliquée audit manipulateur, et
- la validation de cette nouvelle position par une troisième action de commande, qui déclenche l'émission vers l'équipement commandé par ledit organe de commande, d'un signal indiquant la nouvelle position de l'organe de commande sélectionné.

Ainsi, grâce au procédé selon l'invention, l'opérateur qui avait l'habitude de manipuler directement les panneaux de commande du processus, peut retrouver les commandes dont il était familier. Il peut donc être très rapidement opérationnel pour manipuler ces panneaux de commandes, par l'intermédiaire d'images de ces panneaux, d'un axe susceptible de balayer toute la surface de l'écran et d'un manipulateur particulièrement adapté.

Par ailleurs, un tel procédé est applicable à tout type de processus, quelque soit le nombre d'équipements à commander pour le contrôle du processus.

Selon une particularité de l'invention, le procédé selon l'invention comprend l'affichage en plein écran de l'organe de commande sélectionné.

Avantageusement, la première action de commande pourra consister en l'entraînement en rotation d'un élément de commande rotatif dudit manipulateur, dont le pivotement entraîne celui de l'axe affiché à l'écran.

Si l'organe de commande sélectionné du panneau de commande est un sélecteur ou un afficheur présentant un paramètre modifiable, la seconde action de commande peut consister en l'entraînement en rotation dudit élément de commande du manipulateur.

Le procédé selon l'invention peut en outre comprendre une étape préalable de sélection de mode de fonctionnement ou d'un panneau de commande, et une étape d'initialisation du mode de gestion de l'axe servant à la désignation d'organes de commandes à l'écran, cette étape d'initialisation étant déclenchée par la détection de la présence d'un doigt de l'opérateur sur ou à proximité de l'élément de commande du manipulateur.

Un mode de réalisation du procédé selon l'invention sera décrit ci-après, à titre d'exemple non limitatif, avec référence aux dessins annexés dans lesquels :
La figure 1 représente schématiquement un exemple de dispositif mis en oeuvre par le procédé selon l'invention ;
La figure 2 illustre un exemple de terminal sur lequel est effectué le contrôle d'un processus tel que, par exemple, le pilotage d'un aérodyne ;
La figure 3 montre en détail un manipulateur du terminal, particulièrement adapté au contrôle du pilotage d'un aérodyne ;
La figure 4 représente en vue de dessus le susdit manipulateur ;
La figure 5 montre en détail le panneau de commande utilisé dans le contrôle de pilotage et affiché sur l'écran du terminal ;
Les figures 6 à 8 sont des représentations d'écrans illustrant des séquences de contrôle du processus.

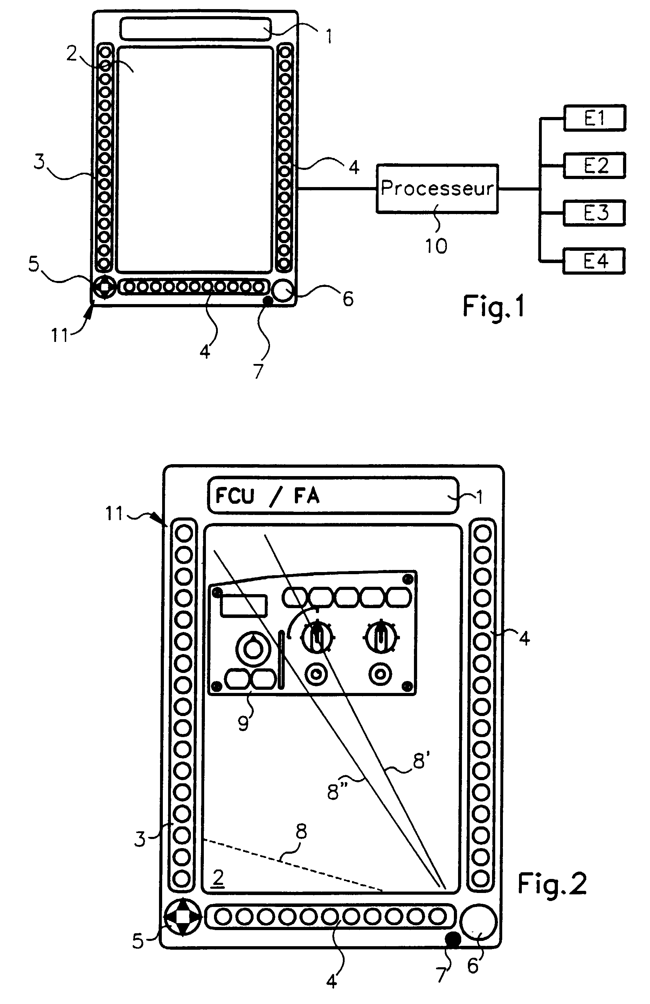

Le dispositif mis en oeuvre par le procédé selon l'invention représenté figure 1 comprend un terminal 11 de communication homme/machine compact et ergonomique, particulièrement conçu pour le contrôle d'un processus dans un espace réduit. Ce terminal 11 est connecté à un processeur 10, lequel est raccordé aux équipements El à E4 de contrôle du processus à commander.

Sur la figure 2, le terminal 11 de forme sensiblement parallélépipédique, comprend un premier écran de visualisation 1 permettant de visualiser le libellé de la ou des fonctions en cours d'exécution sur le terminal 11. Cet écran présente une forme rectangulaire et est disposé sur une face du terminal 11 le long du bord supérieur. Il est par exemple de type LCD et équipé d'une dalle tactile transparente disposée devant l'écran, de manière à servir en même temps de touches de commande, le libellé de la commande étant affiché sur l'écran.

Le terminal 11 comprend un second écran de visualisation 2 occupant la majeure partie de la susdite face. Cet écran est par exemple constitué d'une matrice de type TFT couleur de 26.5 cm de diagonale et de 640 x 480 pixels. Il peut également être équipé d'une dalle tactile transparente disposée devant l'écran.

Le terminal 11 comprend également trois ensembles de touches disposés respectivement le long des bords inférieur et latéraux gauche et droite du second écran 2. Ces touches présentent avantageusement un double mode de fonctionnement, à savoir un mode de clavier et un mode sensitif lorsque les touches sont simplement effleurées.

Par ailleurs, le terminal 11 comprend un dispositif 5 de gestion d'un curseur disposé dans le coin inférieur gauche de l'écran, ce dispositif 5 comprenant quatre interrupteurs aptes à commander par impulsions le déplacement sur l'écran d'un curseur ou d'un objet dans deux directions, et un manipulateur 6 conçu pour atteindre rapidement et intuitivement un point ou une zone de l'écran et le sélectionner, ce manipulateur étant associé à une touche de validation 7.

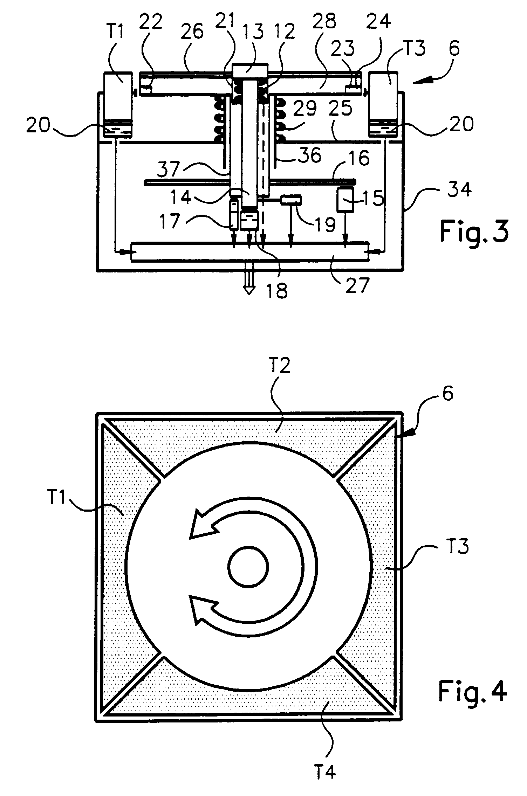

Dans l'exemple représenté sur la figure 3, le manipulateur 6 comprend un boîtier 34, de forme parallélépipédique dont la face supérieure 25 est munie d'un palier central vertical 36 dans lequel peut pivoter et coulisser axialement un arbre rotatif tubulaire 37.
Cet arbre rotatif 37 porte, à son extrémité supérieure, un disque rotatif 28 qui s'étend parallèlement à la face supérieure 25.
Le maintien en position axiale de l'ensemble arbre 37 - disque 28 est assuré par un ressort de compression 29 disposé coaxialement entre la face supérieure 25 et le disque 28. Le disque 28 comprend, par ailleurs, une cavité centrale coaxiale 21 qui communique avec le volume intérieur de l'arbre tubulaire 37, et dans laquelle est monté coulissant, avec rappel par ressort 12, un poussoir coaxial 13 solidaire d'une tige 14.

Par ailleurs, le boîtier 34 renferme :
- un détecteur 15 disposé en regard d'une roue codeuse 16 portée par l'arbre tubulaire 37, coaxialement à celui-ci, de manière à délivrer une information relative à la position angulaire du disque rotatif 28,
- un micro-interrupteur 17 disposé sous l'arbre tubulaire 37 de manière à être actionné par celui-ci lorsqu'à la suite d'une pression exercée sur le disque 28, l'arbre 37 se déplace vers le bas contre l'action du ressort 29, au delà d'une course prédéterminée,
- un micro-interrupteur 18 disposé sous l'extrémité de la tige 14 qui ressort de l'extrémité inférieure de l'arbre tubulaire 37, de manière à être actionné à la suite d'une pression exercée sur le poussoir 13, et
- une jauge de contrainte optionnelle 19, placée en parallèle ou en remplacement de l'interrupteur 17, de manière à obtenir un signal proportionnel à la force exercée sur le disque 28.

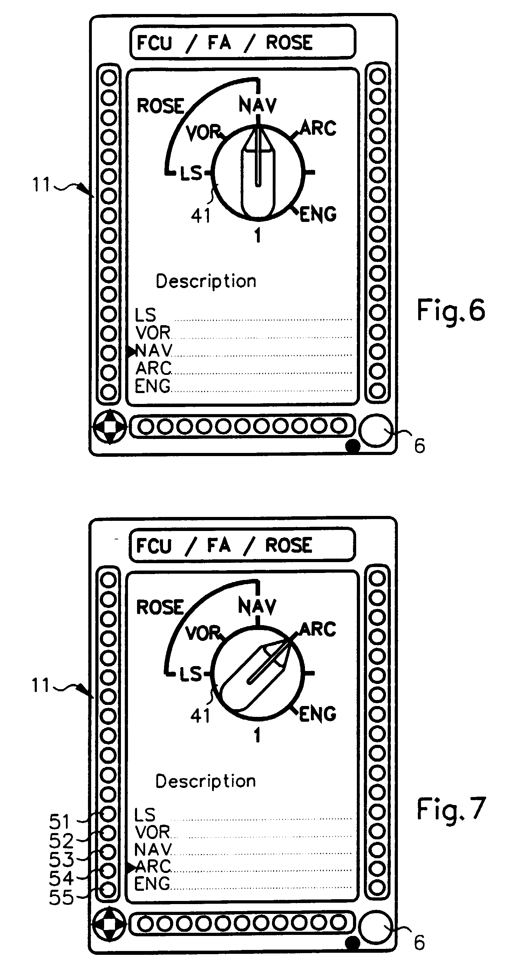

Dans cet exemple (figure 4), la face supérieure 25 du boîtier 34 supporte quatre touches de fonction T1 à T4, de forme trapézoïdale, avec la petite base incurvée, qui occupent l'espace compris entre le disque 28 et les bords latéraux du boîtier 34. Ces touches de fonction T1 à T4 agissent sur des interrupteurs respectifs 20 montés sur la face supérieure 25. L'une de ces touches peut avantageusement servir de touche de validation en remplacement de la touche 7.

La surface cylindrique du disque 28 est munie d'une piste crantée 22 sur laquelle vient porter une bille 23 sollicitée par un ressort 24 en appui sur le boîtier 34, de manière à engendrer une sensation tactile lors de l'entraînement en rotation du disque 28.
La face supérieure du disque 28 peut être recouverte d'une couche tactile apte à déceler la présence d'un doigt ou d'une main à proximité immédiate du disque 28, voire même un effleurement de ce dernier.

Les interrupteurs 17,18,20, le détecteur 15, la jauge de contrainte 19 et la surface tactile 26 sont connectés à un circuit d'interface (non représenté) monté dans le terminal 11 qui assure une mise en forme des signaux délivrés par ces éléments et les transmet sous une forme numérique appropriée vers le processeur 10.

Tel que précédemment décrit, le manipulateur 6 permet d'exécuter une multiplicité de fonctions, telles que le contrôle d'un processus.

Ainsi, par exemple, après avoir sélectionné un panneau de commande à l'aide d'une des touches du terminal 11, l'image 9 apparait sur l'écran 2 (figure 2). Cette image 9 représente une portion d'un tableau de bord d'un aérodyne. Si l'on approche le doigt du manipulateur 6, il apparaît surimpression sur cette image 9, un axe 8 que l'on peut faire pivoter au moyen du manipulateur 6 en faisant tourner le disque rotatif 28. Le point de rotation de cet axe 8 coïncide sensiblement avec le coin inférieur droit de l'écran 2. Pour désigner un objet représenté sur cette image 9, il suffit de faire tourner le disque 28 de manière à faire pivoter l'axe 8 jusqu'à ce qu'il atteigne une position 8' dans laquelle il traverse l'objet à désigner. A partir cet instant, l'objet est singularisé, par exemple en changeant la couleur de ses contours de manière à indiquer à l'opérateur quel est l'objet de l'image désigné par l'axe 8. De cette manière, si l'axe 8 traverse à la fois plusieurs objets susceptibles d'être désignés, le premier objet traversé par l'axe 8 en partant de l'axe de rotation de ce dernier est singularisé.

Pour sélectionner un autre objet traversé par l'axe 8, il suffit selon un premier mode d'exécution, de faire tourner légèrement le disque 28, ce qui provoque la singularisation de l'objet suivant. Grâce à cette méthode, une seule touche de validation suffit.
Selon un autre mode d'exécution qui est préférable lorsque le nombre d'objets susceptibles d'être traversés simultanément par l'axe 8 est important, on obtient la singularisation de l'objet suivant traversé par l'axe 8, en partant du point de rotation de ce dernier, en exerçant une pression sur le disque 28 sans le faire tourner.

Pour sélectionner un objet, il suffit alors d'actionner la touche de validation une fois que l'objet à sélectionner est singularisé.

Ainsi, tous les objets affichés à l'écran peuvent être désignés très simplement et très rapidement, à l'aide d'un nombre minimum de manipulations.

Tel que montré en détail sur la figure 5, l'image du tableau de bord comprend deux sélecteurs 41,42, trois potentiomètres 43 à 45, un afficheur 46 et 7 touches 47 à 53.
Comme précédemment décrit, la désignation du sélecteur 41 au moyen du manipulateur 6 est obtenue en amenant l'axe 8 dans la position 8' de manière à traverser l'image de ce sélecteur 41 ; les contours du sélecteur apparaissent alors dans une autre couleur. Sur la figure 2, on peut constater que l'axe 8 traverse également la touche 49. Pour la sélectionner, il suffirait d'appuyer sur le disque 28.

Une fois que l'objet à sélectionner est singularisé, il suffit de valider cette sélection, ce qui entraîne l'affichage de l'écran de la figure 6. Sur cet écran, l'opérateur a sélectionné le sélecteur 41 qui apparaît sous une forme agrandie en remplacement de l'image 9 du tableau de bord. En dessous de l'image du sélecteur 41 est affichée une légende décrivant le sélecteur, ainsi que les fonctions, LS, VOR, NAV, ARC, ENG, qui peuvent être sélectionnées grâce à ce sélecteur 41. Dans cette légende, les libellés de ces fonctions apparaissent à l'écran 2 en regard de certaines touches 51 à 55 du terminal 11. Pour obtenir davantage d'informations sur une de ces fonctions, il suffit d'actionner la touche correspondante, ce qui provoque l'affichage en plein écran d'une description détaillée de cette fonction.

Pour faire tourner le sélecteur 41 et ainsi choisir une fonction, il suffit de faire tourner le disque rotatif 28 du manipulateur 6 dans le sens souhaité.
Ainsi, dans l'exemple illustré sur la figure 7 où le sélecteur 41 est montré positionné un cran vers la droite par rapport à l'image de la figure 5, on a fait tourner le disque rotatif 28 vers la droite d'un angle se situant entre une valeur minimum et une valeur maximum, de manière à faire tourner instantanément le sélecteur 41 d'un cran. Une fois que le sélecteur se trouve dans la position souhaitée, il suffit de valider cette sélection en actionnant la touche de validation, par exemple 7, ce qui entraîne l'affichage de l'écran de la figure 2 dans lequel le sélecteur 41 se trouve dans la nouvelle position, et l'envoi par le processeur 11 d'un signal indiquant cette nouvelle position vers l'équipement concerné.

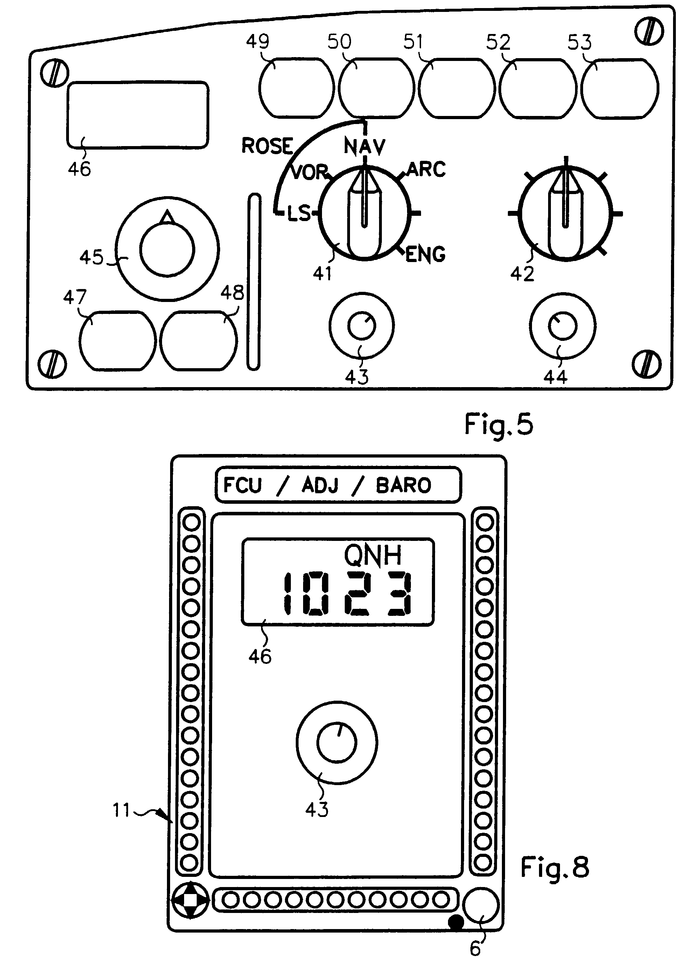

La figure 8 montre en plein écran l'afficheur 46 et le potentiomètre 43 du tableau de bord, qui permet de modifier le paramètre indiqué par l'afficheur 46. Pour obtenir cet écran, on a positionné l'axe 8 par exemple dans la position 8" sur la figure 2, de manière à ce qu'il traverse soit l'afficheur 46, soit le potentiomètre 43, et on a appliqué des impulsions de pression sur le disque 28 jusqu'à ce que l'un ou l'autre de ces deux éléments soit singularisé.

Pour modifier la valeur affichée par l'afficheur 46, il suffit de faire tourner le potentiomètre 43 dans le sens voulu en agissant dans le même sens sur le disque rotatif 28 du manipulateur 6. Lorsque la valeur désirée est indiquée par l'afficheur 46, il suffit de valider cette modification de paramètre en actionnant la touche de validation, ce qui provoque l'affichage de l'image de la figure 2 sur laquelle l'afficheur 46 indique la nouvelle valeur, et l'envoi de la nouvelle valeur du paramètre à l'équipement E1,E2,E3 ou E4 concerné.

De même, pour actionner l'une des touches 47 à 51 du panneau de commande, il suffit simplement de la sélectionner de la même manière à l'aide du manipulateur 6, puis d'appliquer une impulsion sur le disque rotatif 28 pour valider cette sélection, d'appliquer à nouveau une impulsion sur le disque 28 pour commander l'enfoncement ou le relâchement de la touche sélectionnée, et de valider cette commande à l'aide de la touche de validation 7.

## Revendications

1. Procédé pour le contrôle d'un processus industriel à l'aide d'un terminal de commande (11) compact et ergonomique comprenant un écran de visualisation (2) sur lequel sont affichées des images (9) représentant des panneaux de commande des équipements (E1 à E4) qui contrôlent le processus, un processeur (10) connecté auxdits équipements (E1 à E4), et un manipulateur (6) manoeuvrable quelle que soit l'orientation de la main, et permettant cependant d'obtenir une grande précision des sélections,
caractérisé en ce qu'il comprend les étapes suivantes :
- l'affichage sur l'écran de visualisation (2) de l'image (9) d'un panneau de commande du processus comportant au moins un organe de commande (41 à 45) et éventuellement au moins un afficheur (46) présentant un paramètre de contrôle du processus, et l'affichage en surimpression d'un axe (8) traversant l'écran (2) et mobile en rotation de manière à pouvoir balayer l'ensemble de l'écran,
- la sélection dudit organe de commande (41), en faisant varier l'orientation de l'axe (8) par une première action de commande manuelle appliquée audit manipulateur (6) jusqu'à ce que l'axe (8) intercepte l'image dudit organe de commande (41),
- la singularisation à l'écran (2), par modification de son aspect, de l'image de l'organe de commande (41) intercepté par ledit axe (8),
- la simulation à l'écran en temps réel de l'actionnement de l'organe de commande (41) sélectionné pour l'amener dans une nouvelle position, en réponse à une seconde action de commande appliquée audit manipulateur (6), et
- la validation de cette nouvelle position par une troisième action de commande, qui déclenche l'émission vers l'équipement (E1 à E4) commandé par ledit organe de commande (41), d'un signal indiquant la nouvelle position de l'organe de commande (41) sélectionné.

2. Procédé selon la revendication 1,
caractérisé en ce qu'il comprend l'affichage en plein écran de l'image de l'organe de commande (41) sélectionné.

3. Procédé selon la revendication 1 ou 2,
caractérisé en ce que la première action de commande consiste en l'entraînement en rotation d'un élément de commande (28) du manipulateur (6).

4. Procédé selon l'une des revendications précédentes,
caractérisé en ce que la sélection d'un organe de commande (41 à 45) du panneau de commande est effectuée en amenant ledit axe (8) sur ledit organe de commande représenté sur l'écran (2) du terminal (11).

5. Procédé selon la revendication 2 ou 3,
caractérisé en ce que la sélection d'un organe de commande du panneau de commande (41) est effectuée en faisant pivoter ledit axe (8) jusqu'à ce qu'une portion de celui-ci se superpose audit organe de commande représenté sur l'écran (2) du terminal (11).

6. Procédé selon l'une des revendications 2 à 5,
caractérisé en ce que, lorsque ledit axe (8) traverse plusieurs organes de commande (41,49) sur l'image (9) du panneau de commande, la sélection d'un de ces organes est effectuée par une quatrième action de commande appliquée audit manipulateur (6).

7. Procédé selon l'une des revendications 2 à 5,
caractérisé en ce que, lorsque ledit axe (8) traverse plusieurs organes de commande (41,49) sur l'image (9) du panneau de commande, la sélection d'un de ces organes est effectuée en faisant pivoter légèrement ledit axe (8).

8. Procédé selon l'une des revendications précédentes,
caractérisé en ce qu'il comprend l'affichage à l'écran (2) du terminal (11) d'une documentation décrivant l'organe de commande (41) sélectionné.

9. Procédé selon l'une des revendications 3 à 8,
caractérisé en ce que ladite quatrième action de commande consiste à exercer une impulsion de pression sur l'élément de commande (28) du manipulateur (6).

10. Procédé selon l'une des revendications 3 à 9,
caractérisé en ce que, lorsque l'organe de commande sélectionné du panneau de commande est un sélecteur (41 à 45) ou un afficheur (46) présentant un paramètre modifiable, la seconde action de commande consiste en l'entraînement en rotation dudit élément de commande (28) du manipulateur (6).

11. Procédé selon l'une des revendications précédentes,
caractérisé en ce que, lorsque l'organe sélectionné est un afficheur (46) indiquant la valeur d'un paramètre modifiable, il comprend l'association de l'image de l'afficheur (46) avec celle de l'organe de commande (43) permettant de modifier ladite valeur.

12. Procédé selon l'une des revendications précédentes,
caractérisé en ce que, lorsque l'organe sélectionné est un afficheur (46) indiquant la valeur d'un paramètre modifiable, il comprend l'affichage en plein écran de l'image dudit afficheur (46) et de l'organe de commande (43) permettant de modifier ladite valeur.

13. Procédé selon l'une des revendications précédentes,
caractérisé en ce qu'il comprend une étape préalable de sélection de mode de fonctionnement ou d'un panneau de commande.

14. Procédé selon la revendication 1,
caractérisé en ce qu'il comprend une étape d'initialisation du mode de gestion de l'axe (8) servant à la désignation des images des organes de commande (41 à 53) affichées à l'écran (2), cette étape d'initialisation étant déclenchée par la détection de la présence d'un doigt de l'opérateur sur ou à proximité de l'élément de commande (28) du manipulateur (6).
